# EUROPEAN PATENT APPLICATION

(11) **EP 2 264 426 A2**
(43) Date of publication of application: **22.12.2010**
(21) Application number: 10164571.1
(22) Date of filing: 01.06.2010
(51) Int. Cl.: G01N 15/02, F23N 5/00

(54) **Method for monitoring the composition of flue gas resulting from a thermal process**

(30) Priority: 17.06.2009 FI 20095684
(71) Applicant: Metso Power Oy, 33100 Tampere (FI)
(72) Inventor: Palonen, Marko, 36120, Suinula (FI); Roppo, Juha, 37560, Lempäälä (FI); Silvennoinen, Jaani, 33100, Tampere (FI)
(74) Representative: Kurra, Sirpa Eliina

(57) **Abstract**

The composition of flue gas generated in a thermal process, especially in the combustion of bio fuel or refuse-derived fuel, is monitored by measuring the quantity of particles belonging to certain size categories in at least one point along the flow path of the flue gas. Such particle size categories are chosen as objects of the measurement, in which the particles are known to consist mainly of alkali chlorides.

## Description

The invention concerns a method for monitoring the composition of flue gas resulting from a thermal process. The method is especially suitable for monitoring the operation of a steam boiler burning chlorine-bearing fuel, but it can also be used in connection with pyrolysis, gasification and other such processes.

When in a steam boiler operating at high steam values (pressure over 80 bar; temperature over 500°C) bio material or refuse-derived fuel is burned either as such or compounded, contamination and corrosion problems of various degrees often occur in the boiler's super-heater area. In most cases, the reason is found in the fuel's high chlorine and alkali content and, on the other hand, in the low quantity of elements protecting against corrosion, such as sulphur and some minerals, for example, kaolinite.

Chlorine-bearing fuels comprise, among others, bio fuels, such as wood chips, bark, sawdust, peat, straw, agricultural waste and black liquor, as well as refuse-derived fuels, such as sorted or unsorted community waste, building waste, industrial waste and various kinds of sewage sludge. Together with sodium and potassium released from the fuel, chlorine will form gaseous alkali chlorides in the flue gas, and these will condense and form deposits on the heat-transferring surfaces and especially on the super-heater surfaces.

As the flue gas gets cooler, the vaporized alkali chlorides form through nucleation a significant number of fine particles, the diameter of which is less than 1 µm. Fine particles have known effects on the health.

Attempts have been made to reduce the harmful effects caused by alkali chlorides, e.g. by compounding different fuels and by adding reagents to the fuel flow or to the fire chamber to turn the chlorine of the alkali chlorides into hydrochloric acid, whose chlorine will not be transferred into deposits.

FI 117631 B proposes feeding to the super-heater area of the steam boiler of a sulphate-containing compound, which forms a special reagent for binding alkali compounds. How much chemical is to be dosed depends on the amount of chlorine contained in the fuel. Since the fuel's composition may vary greatly in practice, more chemical than is really needed will often be supplied to be on the safe side.

EP 1354167 B1 proposes addition of sulphurous additive to the flue gas flow in between the combustion zone and the super-heater area. Dosing of the chemical is based on the chlorine content of the fuel or on the content of gaseous alkali chlorides measured from the flue gas.

US 7229833 B1 has proposed a method based on photo-spectrometry for measuring the concentration of alkali chlorides from the flue gas near the super-heater. The solution is based on the fact that alkali chlorides in the gas phase can be identified at high temperatures and they can be defined by spectral analysis based on ultraviolet light. Based on the concentration of alkali chlorides measured in the flue gas, the burning of the fuel is controlled, for example, by feeding into the fire chamber an additive reducing the alkali chloride content or by changing the fuel feed ratio. The "faculty of vision" of a measurement based on the UV ray is limited, especially with dense suspensions and with high particle concentrations. This goes for all optical measurements, also for the IR technique. The method is not suitable for use at low temperatures, because it will only identify alkali chlorides in the gas phase.

Although the role of alkali chlorides in corrosion at a high temperature is well known, measuring them by the known online methods is expensive and difficult. Thus an obvious need exists to develop an easy and advantageous way of monitoring the alkali chloride content of flue gas generated in a thermal process.

There has been much research into the chemistry of alkali chlorides in the fire chamber and into their impact on the contamination and corrosion of heat-transferring surfaces. Some researches have also measured and reported on the quantity of fine particles in flue gases. However, they have never proposed the idea of a measurement of alkali chlorides based on the quantity of fine particles. The reason for this has probably been that the results have not been entirely unambiguous, as the quantity of alkali chlorides does not in all size categories correlate with the quantity of fine particles.

The objective of the invention is a simple and advantageous way of monitoring the concentration of alkali chlorides in flue gas generated as a result of a thermal process.

The method according to the invention is characterized by the features presented in the characterizing part of the independent claim 1.

The invention is based on the observation that Na, K and Cl form particles of a certain size in the flue gas. By measuring the quantity of particles belonging to a certain size category in at least one point along the flow path of the flue gas it is possible to follow the concentration of alkali chlorides and to detect any changes occurring in the concentration. Such particle size categories are chosen as objects of the measurement, wherein the particles are known to consist mainly of alkali chlorides.

Nano particles are formed in the flue gas through homo- and heterogeneous nucleation, and they will grow into even larger particles through agglomeration and as vapours condense on to the surface of the particles. It has been found in researches that the finest particles existing in the flue gas, especially those belonging to the size category of under 1 µm, consist mainly of alkali metals and chlorine. In other words, the finest particles comprise mainly alkali chlorides KCl and NaCl, which have vaporized in the fire chamber. These are the components causing chlorine corrosion on the super-heater surfaces at high temperature and pressure values of the steam. It has been found in measurements that 80 - 95 % of the particles in size categories 0.03 - 0.26 µm are alkali chlorides, and even in the size category 0.26 - 0.61 µm the particles contain a significant amount of alkali chlorides, usually about 30 - 60 % of their weight.

The quantity of fine particles belonging to certain size categories correlates clearly with the alkali vapours occurring in the flue gas. Thus, when the device measuring the particle content of the flue gas registers changes in the quantity of fine particles, the conclusion can be drawn that the alkali chloride content of the flue gas has changed. The change may be due, for example, to a change in the fuel quality or to an effect of a supplied additive. Since the measuring arrangements in the sampling in particular are sensitive to various variables, results obtained from various plants cannot necessarily be regarded as comparable with one another, but the measurement of alkali chlorides must be separately calibrated for each plant.

Depending on the temperature, alkali chlorides occur in the flue gas either as vapours or as aerosol particles. In the method according to the invention, the alkali vapours are brought in connection with sampling into the particle phase, and from the sample the quantity of particles of that size category is measured, which is known to contain plenty of alkali chlorides. The measurement of the quantity of particles can be carried out either as a measurement of the number of particles or as a measurement of their mass. If the mass of particles is to be measured, such too big particles must first be removed from the sample before the measurement, the alkali chloride content of which is minimal and which would thus misrepresent the result of the measurement.

It is a challenging task to measure fine particles from flue gas having, for example, a temperature of 650 - 900 °C in the super-heater area of a circulating fluidized bed boiler and containing corrosive substances and great amounts of different kinds of particles. Introducing a complicated and sensitive electronic measuring device into such conditions is impossible in practice, on the one hand from the aspect of the durability of the materials and, on the other hand, due to the high quantity of particles. In fact, the analysis of particles and gases is usually based on sampling and on taking a cooled and diluted sample outside the measured process for analysis. It is important in sampling that the sample is cooled and "extinguished" as quickly as possible after removing it from the process. Extinguishing means stopping the chemical and physical processes of change. Extinguishing is carried out by mixing the sample into an inert gas, whereby the sample is diluted at the same time to become suitable for analysis. FI 119450 B discloses a diluting sampler for collecting a gaseous sample having a temperature essentially higher than the normal temperature.

Flue gas is an aerosol, in which the particle size varies from a few nanometres to a few tens of micro metres. Before measuring the quantity of fine particles and, especially, before measuring their mass it is possible by using a pre-separator to remove from the sample those particles, whose diameter is over 1 µm, preferably over 0.25 µm. When measuring the alkali chloride content based on the number of particles, the number of big particles has a relatively small effect on the result of measurement. When measuring the alkali chloride content based on the mass of particles, big particles have a significant effect on the measurement result: Thus, when measuring the number of particles, a pre-separation of big particles is not as critical as when measuring the mass of particles.

The quantity of fine particles contained in a flue gas sample can be measured by using devices known as such, such as an impactor, an electric impactor, an electric detector, a condensation nucleus calculator, or some other corresponding measuring device suitable for measuring fine particles.

The impactor is a particle collector, in which the travelling direction of an airflow deflects abruptly above a collecting plate. Particles bigger than a limit will not then have the time to turn with the flow, but they will impact into a collecting base. The impactor divides the particles into two parts according to their aerodynamic size. Several consecutive collection degrees can be set up (cascade-impactor), whereby information about the size distribution is obtained. The impactor's collecting plates are usually exchanged at intervals of some hours or days, and they are weighed, whereby the mass content of the particles is established. The plates may also be taken to a chemical analysis. The impactor can be made to work in real time, if the particles arriving at the collecting plate are counted by using, for example, a piezo-electric crystal or electrometers. The impactor can also be used as a pre-separator in front of a measuring device to remove from the aerosol those particles, which are bigger than the measuring range.

The Electrical Low Pressure Impactor (ELPI) developed by Dekati Oy is suitable for measuring the particle size distribution and the particle content in real time within a particle size range of 7 nm - 10 µ. ELPI combines the impactor technology known as such with charging and electric identification of the particles. Using ELPI it is possible to measure directly the number of particles belonging to certain size categories, whereas the ordinary impactor measures only the mass of particles belonging to certain size categories.

Electrical detection of particles may also be implemented by using the EtaPS detector developed by Dekati Oy, in which the particles are charged electrically and their number is calculated by an electrometer.

An alternative to the particle measurement is the condensation, nucleus calculator developed by TSI Inc (for example, CPC 3775), in which the particles are condensed and their number is calculated with the aid of an optical detector.

The solution according to the invention combines particle sampling, in connection with which alkali vapours are brought into the particle phase, with a measurement of the number of particles thus formed. Pre-separation of big particles is combined with the measurement when required. The method does not require constant analysing of the composition of fine particles. On the other hand, since the sample taken from the flue gas has such a size distribution that the elements K, Na and Cl have become especially concentrated therein, it is possible to analyze them chemically from the sample. A correctly performed sampling and handling of the sample are important factors both in the measurement of the number of particles and in the analysis of the composition of the particles.

With the aid of the invention it is possible in a simple and advantageous manner to monitor the quantity of alkali chlorides in flue gases. When the number of particles within a small size category increases, it can be assumed that the alkali chloride content has increased. When the measured particle content differs from a predetermined range, the process control system can sound an alarm, in consequence of which a step is taken which controls the operation of the process.

The alkali chloride content of flue gas can be reduced, for example, by changing the composition of the fuel mixture. By reducing the share of the fuel component containing much chlorine and increasing the share of the component containing little chlorine, the quantity of alkali chlorides can be brought back within the permissible range.

Another way of reacting to an increased particle content is by increasing the supply into the boiler of an additive binding alkali chlorides: Such additives are described, for example, in FI 117631 B.

The particle content of the flue gas can be measured at one or more points along the flow path of the flue gas, such as in the top part of the fire chamber, in the super-heater area or in the flue. More than one measurement makes it possible to compare with each other the particle contents measured at different points. Sampling and measuring are not restricted to a certain temperature range. The method can be applied in various types of steam boiler, gasifier and pyrolyzer, in which energy is produced from biomaterial or from refuse-derived fuel. Using the method it is also possible to measure the alkali chloride content of product gas generated in pyrolysis or in gasification. The measuring system, the points of measurement and the target values for the particle content are preferably calibrated separately for each individual plant.

In this context, thermal process means processing fuel, for example, by burning, gasifying or pyrolysing in such a way that the treatment will result in the production of flue gas or product gas as well as incombustible residues.

When the alkali chloride content of flue gas is observed constantly by measuring the particle content in at least one point along the flue gas flow path, the process can be run closer than at present to the critical limit, that is, with bigger shares of bio fuel or refuse-derived fuel and/or with a smaller supply of additive. Thus, by using the invention it is possible to achieve significant financial advantages.

In the following, the invention will be described by referring to the figures in the appended drawings.
Figure 1 shows the particle size distribution of flue gas and the composition of the particles with a first fuel composition.
Figure 2 shows the particle size distribution of flue gas and the composition of the particles with a second fuel composition.
Figure 3 shows the particle size distribution of flue gas and the composition of the particles with a third fuel composition.
Figure 4 shows the particle size distribution of flue gas in a measurement based on the number of particles.
Figure 5 shows the particle size distribution of the same sample (Figure 4) in a measurement based on the mass of particles.
Figure 6 is a view in principle of a circulating fluidized bed boiler, in which a measurement of alkali chlorides according to the invention can be arranged.

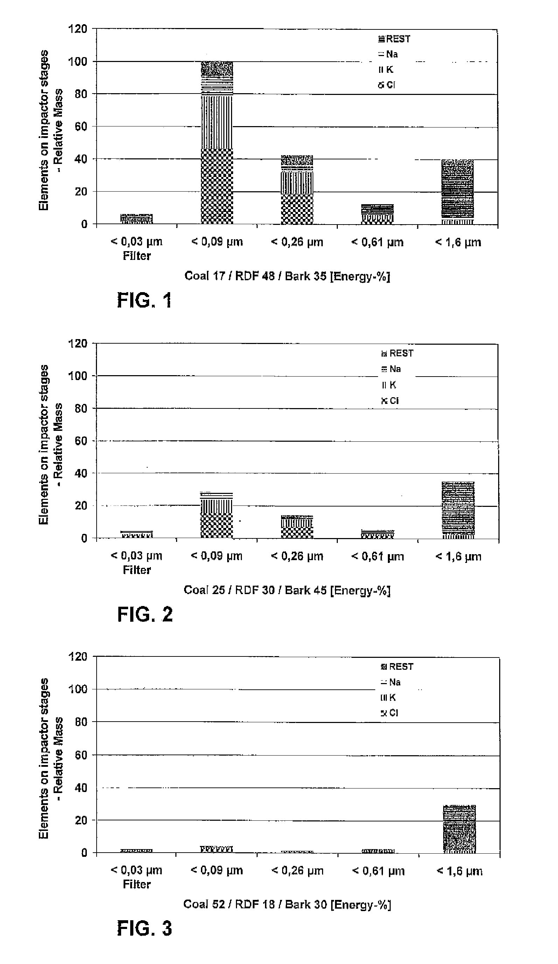

Figure 1 is a bar chart view of the particle size distribution in flue gas and of the composition of particles of different size categories in a situation wherein the fuel mixture contains 17 % of coal, 48 % of refuse-derived fuel (RDF) and 35 % of bark from trees. The horizontal axis shows the particle size (impactor stage) and the vertical axis shows the relative mass and alkali chloride content (Cl, K, Na and other chemical elements) of particles belonging to the concerned size category.

It can be seen in Figure 1 that there is a distinct peak in the area of fine particles for the particle size distribution of flue gas produced with a fuel mixture containing plenty of refuse-derived fuel. The particles in the size category 0.03 - 0.09 µm consist mainly of chlorine, potassium and sodium, and also in the size categories 0.09 - 0.26 µm and 0.26 - 0.61 µm chlorine, potassium and sodium represent a large share in the particle mass. On the other hand, in the size category 0.61 - 1.6 µm and in the size categories above this (not shown) the share of other chemical elements increases. This supports the fact that together with alkali metals the chlorine contained in the flue gas will form alkali chloride salts NaCl and KCl, which when the flue gas is cooling will condense into aerosol particles of a certain size.

Figure 2 is a similar bar chart view of a situation where the fuel mixture contains 25 % of coal, 30 % of refuse-derived fuel and 45 % of bark. The quantity of fine particles has decreased clearly, when the share of refuse-derived fuel was reduced in comparison with Figure. 1. In this case, too, the fine particles, especially in the size categories 0.03 - 0.09 µm and 0.09 - 0.26 µm, consist mainly of alkali chlorides.

Figure 3 is a bar chart view of a situation where the fuel mixture contains 52 % of coal, 18 % of refuse-derived fuel and 30 % of bark. With this fuel composition very little particles are generated in the small size category.

Refuse-derived fuel usually contains more chlorine and alkali metals than, for example, coal does. It is obvious judging from Figures 1 - 3 that the particle size distribution of flue gas, and especially the quantity of particles in the small size category, correlates well with the fuel's composition. Since fine particles consist mainly of alkali chlorides, it is obvious that by measuring the quantity of fine particles it is possible to observe the quantity of alkali chlorides in the flue gas.

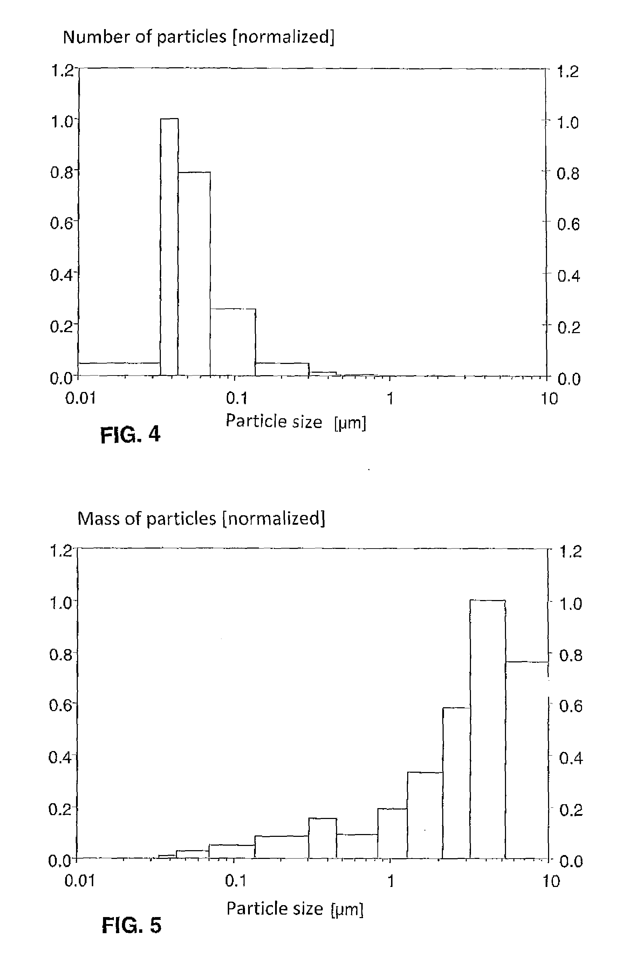

Figures 4 and 5 illustrate differences between a measurement based on the number of particles and a measurement based on the mass of particles. Figure 4 shows the particle size distribution of flue gas based on the number of particles and Figure 5 shows the particle size distribution of the same sample based on the mass of particles. In both figures the horizontal axis shows the particle, size logarithmically, and on the vertical axis in Figure 4 the number of particles is normalized, and in Figure 5 the particle mass is normalized. The test run was done with a fuel mixture containing plenty of chlorine and alkali metals.

Figure 4 indicates that a measurement of the number of particles gives a good notion of the number of fine particles and this way of the quantity of alkali chlorides in the flue gas.

Figure 5 indicates that particles in the big size category, which contain hardly any alkali chlorides, affect the measurement result significantly in a measurement based on the mass of particles. From this the conclusion can be drawn that in an alkali chloride measurement based on the mass it would be wise to use pre-separation, which removes those oversized particles from the flue gas, which are known to contain very little alkali chlorides.

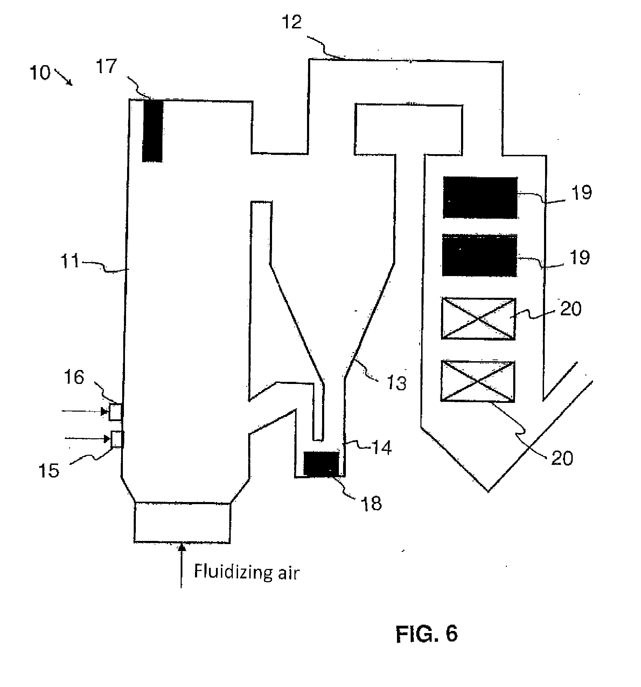

Figure 6 shows an example of a thermal process, in which the method according to the invention can be used. A circulating fluidized bed boiler 10 comprises a fire chamber 11, a flue gas duct 12 and a cyclone 13. Fluidized material carried along with flue gas is separated from the flue gas in the cyclone 13. The fluidized material is returned to the bottom part of the fire chamber 11 through a return duct 14. Fluidizing air is supplied into the fire chamber 11 from the bottom part of the fire chamber. With the aid of fuel supply means 15 such fuel is supplied into the fire chamber 11, which may be bio fuel, refuse fuel, coal or their mixture. In addition, the air needed for the combustion is brought into the fire chamber from air nozzles 16. In connection with the circulating fluidized bed boiler 10 there are various kinds of heat exchangers, with which heat is transferred from the flue gas into steam, water or air. In the top part of fire chamber 11 there is a first super-heater 17, in the return duct 14 for fluidized material there is a second super-heater 18, and in the flue gas duct 12 there are several heat exchangers 19, 20, one behind the other. All these heat exchangers 17, 18, 19; 20 are exposed to contamination and chlorine corrosion.

According to the idea of the invention, the quantity of fine particles can be measured at one or more points along the flow path of the flue gas. Advantageous measurement points, are, for example, the top part of the fire chamber 11 near the first super-heater 17, the return duct 14 near the second super-heater 18, and the flue 12 near the heat exchangers 19, 20. The same measuring technique may be used at several different points along the flue gas flow path, whereby the measurement results are comparable with one another.

Although a circulating fluidized bed boiler was described in the foregoing, the invention can of course also be applied, for example, in fluidized-bed boilers, in grate furnaces, in soda recovery boilers, in gasification plants and in pyrolyzers.

Many different modifications of the invention are possible within the scope of protection defined in the claims, which are presented in the following.

## Claims

1. Method for monitoring the composition of flue gas resulting from a thermal process, **characterized in that** the quantity of particles belonging to certain size categories is measured in at least one point along the flow path of the flue gas and that such particle size categories are chosen for measurement, in which the particles are known to consist mainly of alkali chlorides.

2. Method according to claim 1, **characterized in that** the measurement comprises steps, in which a gas sample is taken from the flow path of the flue gas, the gas sample is diluted and cooled in order to bring the gaseous alkali chlorides into the particle phase, and the quantity of particles belonging to certain size categories is measured from the gas sample.

3. Method according to claim 1 or 2, **characterized in that** the number of particles belonging to certain size categories is measured from the gas sample.

4. Method according to claim 1 or 2, **characterized in that** the mass of particles belonging to certain size categories is measured from the gas sample.

5. Method according to claim 4, **characterized in that** before measuring the mass of particles those particles are removed from the gas sample, whose diameter is over 1 µm, preferably over 0.25 µm.

6. Method according to some preceding claim, **characterized in that** the particle content measured in the flue gas is compared with a guiding value given for the particle content, and when the measured particle content differs from the guiding value a step is taken to control the operation of the process.

7. Method according to claim 6, **characterized in that** based on the particle content of the flue gas the composition of the fuel mixture to be supplied into the process is adjusted.

8. Method according to claim 6, **characterized in that** based on the particle content of the flue gas the supply into the process of an additive affecting the alkali chloride content is adjusted.

9. Method according to some preceding claim, **characterized in that** the particle content of the flue gas is measured at two or more points along the flow path of the flue gas.
